⑲ 〗〗〗 **Europäisches Patentamt**

**European Patent Office**

**Office européen des brevets**

(11) Veröffentlichungsnummer : **0 064 159**
**B1**

(12) **EUROPÄISCHE PATENTSCHRIFT**

(45) Veröffentlichungstag der Patentschrift :
13.03.85

(21) Anmeldenummer : 82102706.7

(22) Anmeldetag : 31.03.82

(51) Int. Cl.⁴ : **G 01 M   3/26, B 01 D 35/14**

(54) Prüfeinrichtung für Filter, insbesondere Sterilfilter.

(30) Priorität : 02.05.81 DE 3117399

(43) Veröffentlichungstag der Anmeldung :
10.11.82 Patentblatt 82/45

(45) Bekanntmachung des Hinweises auf die Patenterteilung : 13.03.85 Patentblatt 85/11

(84) Benannte Vertragsstaaten :
AT BE CH FR GB IT LI LU NL SE

(56) Entgegenhaltungen :
DE-U- 7 931 402

(73) Patentinhaber : Huschke, Bruno, Ing.-grad.
Hauptstrasse 12
D-8931 Reichertshofen (DE)

(72) Erfinder : Huschke, Bruno, Ing.-grad.
Hauptstrasse 12
D-8931 Reichertshofen (DE)

(74) Vertreter : Liebau, Gerhard, Dipl.-Ing.
Birkenstrasse 39
D-8900 Augsburg 22 (DE)

## Beschreibung

Die Erfindung betrifft eine Prüfeinrichtung für Filter, insbesondere Sterilfilter, mit einem, einen Lufteinlaß und einen -auslaß aufweisenden Filtergehäuse zur Aufnahme des zu prüfenden Filters, einer an den Lufteinlaß angeschlossenen Einlaßleitung, in welcher der Luftdruck mittels eines Einlaßventiles regelbar ist, und einem Registriergerät.

Bei der Prüfung von Filtern werden diese mittels Prüfeinrichtungen einem sogenannten Druckhaltetest bei einem vorher bestimmten Druck unterzogen. Hierbei wird durch Einpressen von Luft die Dichtigkeit des vorher mit einer Flüssigkeit, beispielsweise Wasser, benetzten Filters geprüft. Anschließend wird der Filter noch einer Prüfung zur Ermittlung des sogenannten « Bubble-Points » unterzogen. Bei Erreichen des Bubble-Points durchströmt die Luft den Filter frei. Der beim Erreichen des Bubble-Points gemessene Druck ist ein Maß für die Porengröße, nach der die Filter eingeordnet werden. Bei verschmutzten Filtern kann man den Grad der Verschmutzung feststellen, da teilweise zugesetzte Poren einen höheren Druck des Bubble-Pointes verursachen.

Bei einer vorbekannten Prüfeinrichtung der eingangs erwähnten Art (DE-GM 79 31 402) wird bei der Prüfung des Filters an den Luftauslaß des Filtergehäuses ein teilweise mit Wasser gefülltes Prüfgerät angeschlossen. Es wird dann von Hand das Einlaßventil geöffnet bis der Druckhaltetestdruck erreicht ist, der an einem an dem Filtergehäuse angeordneten Manometer abgelesen werden kann. Aufgrund der beim Erreichen des Druckhaltetestdruckes aus der Flüssigkeit aufsteigenden Luftblasen sollen dann Rückschlüsse auf die Dichtigkeit des Filters gemacht werden. Diese optische Prüfmethode ist umständlich, zeitraubend und ungenau. Durch weitere Öffnung des Einlaßventiles, was langsam und gleichmäßig durchgeführt werden sollte, muß dann der Druck solange gesteigert werden, bis man durch eine verstärkte Luftblasenbildung in dem Prüfgerät den « Bubble-Point » erkennt, wobei dann der zugehörige Druck am Manometer abgelesen werden muß. Auch dies ist wieder umständlich, zeitraubend und ungenau. Hierbei wurde auch vorgeschlagen, das Flüssigkeitsreservat des Prüfgerätes als Venturi-Rohr auszubilden, welches in seinem Verengungsbereich an einen Widerstandsmesser angeschlossene Elektroden aufweist, die die Leitfähigkeit des Wassers in dem Flüssigkeitsreservat messen. Ohne Blasenbildung ist die Leitfähigkeit des Wassers im Flüssigkeitsreservat am höchsten, während mit zunehmender Blasenaktivität die Leitfähigkeit sinkt und der damit zunehmende Widerstand am Widerstandsmesser ablesbar ist. Der Widerstandsmesser sollte mit einem Registriergerät, wie einem Schreiber oder dergleichen gekoppelt sein, das die Blasenaktivität registriert. Abgesehen davon, daß auch diese Meßmethode der Blasenaktivität ungenau ist, und sich deshalb in der Praxis nicht bewährt hat, konnte der exakte Bubble-Point-Druck ebenfalls nur durch Ablesen des Manometers und nur ungenau ermittelt werden.

Besondere Probleme ergaben sich auch dann, wenn nach den bisherigen Untersuchungsverfahren Sterilfilter geprüft werden sollten. Da die Prüfung an der Auslaßseite des Filtergehäuses, also an der sterilen Seite stattfand, bestand die Gefahr einer Sekundär-Kontamination. Zur Vermeidung dieser Sekundär-Kontamination war das bekannte Prüfgerät mit zusätzlichen Filterflächen ausgerüstet, die zum Teil hydrophob und zum Teil hydrophil ausgebildet waren. Hierdurch ergaben sich nebst anderen Nachteilen auch höhere Herstellungskosten.

Der Erfindung liegt nun die Aufgabe zugrunde, eine Prüfeinrichtung für Filter, insbesondere Sterilfilter, der eingangs erwähnten Art zu schaffen, die genau, zeitsparend, weitgehend automatisch und reproduzierbar arbeitet, dabei eine exakte Registrierung des Druckhaltetestdruckes und des Bubble-Point-Druckes ermöglicht und bei Sterilfiltern in einfacher Weise eine Sekundär-Kontamination vermeidet.

Die Prüfeinrichtung ist nach der Erfindung gekennzeichnet durch eine Druckregeleinrichtung zur Erzeugung eines kontinuierlich und gleichförmig ansteigenden Druckes in der Einlaßleitung, einen den Luftdruck in der Einlaßleitung überwachenden elektronischen Druckaufnehmer, eine elektronische Auswerte- und Steuerschaltung mit einem Zeitschalter, einer einstellbaren Schwelle für eine Druckeinstellung und einem Spitzenwertdetektor, wobei die Auswerte- und Steuerschaltung das Einlaßventil und ein an die Einlaßleitung angeschlossenes Entlüftungsventil steuert, sowie auf das Registriergerät einwirkt, wobei obige Bauteile derart geschaltet sind, daß über die Druckregeleinrichtung der Luftdruck in der Einlaßleitung bis zum Erreichen des mittels der Schwelle einstellbaren Druckhaltetestdruckes gesteigert wird, dann das Einlaßventil solange geschlossen wird, bis es nach Ablauf der am Zeitschalter eingestellten Zeit erneut geöffnet wird und über die Druckregeleinrichtung eine weitere Steigerung des Luftdruckes solange herbeigeführt wird, bis bei Erreichen des Bubble-Points mittels des Spitzenwertdetektors kein weiterer Luftdruckanstieg mehr feststellbar ist und durch den Spitzenwertdetektor das Entlüftungsventil bei gleichzeitiger Schliessung des Einlaßventiles geöffnet wird.

Im Gegensatz zu den bisher bekannten Prüfeinrichtungen wird die erfindungsgemäße Prüfeinrichtung ausschließlich an die Einlaßseite des Filtergehäuses angeschlossen, wodurch von vornherein bei Sterilfiltern eine Sekundär-Kontamination völlig ausgeschlossen ist. Die Druckverhältnisse in der Einlaßleitung werden automatisch geregelt, so daß die Bedienungsperson entlastet ist und das Prüfergebnis nicht mehr von der Gewissenhaftigkeit der Bedienungsperson abhängt. Mittels des Spitzenwertdetektors läßt sich auch der Bubble-Point-Druck sehr exakt erfassen. Nicht nur dieser Druck sondern auch der Druckhaltetestdruck und der gesamte Druckverlauf können durch das angeschlossene Registriergerät, beispielsweise einen Schreiber, genau registriert werden. Durch die genaue und automatische Arbeitsweise der neuen Prüfeinrichtung kann eine Überprüfung auch jederzeit unter den gleichen Prüfbedingungen wiederholt werden.

Vorteilhafte Ausgestaltungen der Erfindung sind in den Unteransprüchen gekennzeichnet.

Ein Ausführungsbeispiel der Erfindung ist anhand der Zeichnung näher erläutert. Es zeigen :

Figur 1 ein Blockschaltbild,

Figur 2 einen typischen, vom Registriergerät registrierten Druckverlauf.

Die Prüfeinrichtung kann an ein normales Druckluftnetz 1 unter Zwischenschaltung eines Druckminderers 2, der in der Leitung 3 für einen konstanten Druck sorgt, angeschlossen werden. In dem Filtergehäuse 4 ist der zu prüfende Filter angeordnet. Der Lufteinlaß 5 dieses Filtergehäuses ist an die Einlaßleitung 6 angeschlossen. In diese Einlaßleitung 6 ist ein, zweckmäßig als pulsierendes Ventil (Pulsventil oder Taktventil) ausgebildetes Einlaßventil 7 vorgesehen. Ferner sind an die Einlaßleitung 6 ein Entlüftungsventil 8 und ein elektronischer Druckaufnehmer 9 angeschlossen. Dieser elektronische Druckaufnehmer wirkt auf eine elektronische Auswerte- und Steuerschaltung 10 ein. Die elektronische Auswerte- und Steuerschaltung 10 weist u. a. einen zweckmäßig einstellbaren Zeitschalter, eine einstellbare Schwelle für eine Druckeinstellung und einen Spitzenwertdetektor auf. Die Auswerte- und Steuerschaltung ist ferner mit einem Registriergerät 11 gekoppelt, welches zweckmäßig als Schreiber ausgebildet ist. Die Auswerte- und Steuerschaltung 10 ist u. a. so ausgebildet, daß sie eine kontinuierliche und gleichmäßige Druckregelung in der Einlaßleitung 6 ermöglicht. Dies erfolgt zweckmäßig über das als pulsierendes Ventil ausgebildete Einlaßventil 7.

Die Auswerte- und Steuerschaltung weist vorteilhaft eine Einstellvorrichtung zur Steuerung des Luftmengendurchsatzes in der Einlaßleitung 6 auf. Bei Verwendung des pulsierenden Einlaßventiles 7 ist mittels der Einstellvorrichtung die Frequenz und das Tastverhältnis des pulsierenden Ventiles 7 einstellbar.

Ferner ist es vorteilhaft, wenn mittels der Einstellvorrichtung der Luftmengendurchsatz nach Beendigung des Druckhaltetestes bis zum Erreichen des Bubble-Point gegenüber dem Luftmengendurchsatz bis zum Erreichen des Druckhaltetestdruckes automatisch reduzierbar ist.

Nachdem die Einlaßleitung der erfindungsgemäßen Prüfeinrichtung an den Einlaß 5 des Filtergehäuses 4 angeschlossen ist, arbeitet die erfindungsgemäße Prüfeinrichtung weitgehend automatisch wie folgt :

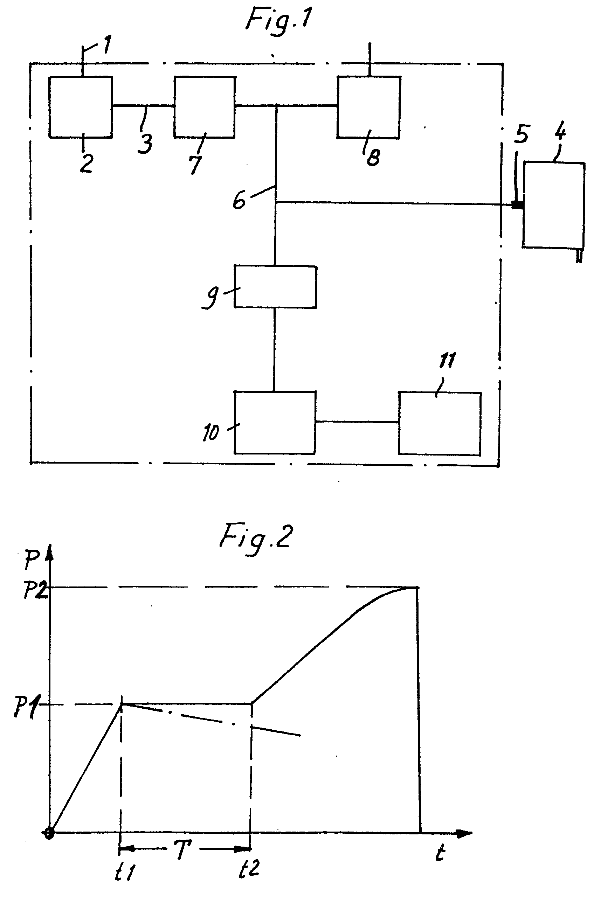

Durch die elektronische Auswerte- und Steuerschaltung wird das Einlaßventil 7 pulsierend geöffnet und geschlossen, wodurch der Luftdruck in der Einlaßleitung 6 kontinuierlich und gleichmäßig ansteigt, bis der voreingestellte Druck, nämlich der sogenannte Druckhaltetestdruck erreicht ist. Dieser Druck ist in der in Figur 2 dargestellten Druckkurve mit P1 bezeichnet. Wenn der Druckhaltetestdruck P1 erreicht ist, so wird über die elektronische Auswerte- und Steuerschaltung 10 das Einlaßventil 7 stillgesetzt, d. h. geschlossen. Während einer gewissen Zeit T, die mittels des Zeitschalters einstellbar ist, bleibt dann das Einlaßventil 7 geschlossen. Ist das zu prüfende Filter dicht, so erkennt man dies daran, daß während der Zeit T kein Druckabfall eintritt. Die vom Registriergerät 11 aufgezeichnete Kurve verläuft dann, wie es aus Figur 2 ersichtlich ist, parallel zur Abszisse. Ist hingegen das Filter undicht, so fällt der Druck entsprechend der strichpunktiert eingezeichneten Linie ab und man kann hieran die Undichtigkeit des Filters erkennen. Nach Ablauf der am Zeitschalter eingestellten Zeit T wird das pulsierende Einlaßventil 7 erneut in Tätigkeit gesetzt. Damit das Erreichen des Bubble-Points möglichst genau festgestellt werden kann, ist es hierbei zweckmäßig, den Luftmengendurchsatz in der Einlaßleitung 6 zu reduzieren. Dies erfolgt dadurch, daß automatisch die Frequenz und das Tastverhältnis des pulsierenden Ventils 7 verringert wird. Unter Tastverhältnis versteht man des Verhältnis der Öffnungszeit zur Schließzeit des Ventiles. Wird kein weiterer Druckanstieg mehr festgestellt, so ist der Bubble-Point erreicht. Das Ausbleiben eines weiteren Druckanstieges wird durch einen Spitzenwegdetektor, beispielsweise eine Differenziationsschaltung festgestellt. Der Spitzenwertdetektor öffnet dann das Entlüftungsventil 8 und schließt das Einlaßventil 7. Aus der von dem Registriergerät aufgezeichneten Kurve kann der Bubble-Point-Druck P2 ohne weiteres entnommen werden. Die Prüfung des Filters ist damit beendet. Sie kann jederzeit unter den gleichen Prüfbedingungen wiederholt werden.

Sollten andere Filter bei einem anderen Druckhaltetestdruck überprüft werden, so wird dieser Druckhaltetestdruck mittels der einstellbaren Schwelle eingestellt. Durch Einstellung des Luftmengendurchsatzes an der Auswerte- und Steuerschaltung kann man ferner die Prüfeinrichtung verschiedenen Filtergrößen anpassen.

**Ansprüche**

1. Prüfeinrichtung für Filter, insbesondere Sterilfilter, mit einem, einen Lufteinlaß und einen -auslaß aufweisenden Filtergehäuse zur Aufnahme des zu prüfenden Filters, einer an den Lufteinlaß angeschlossenen Einlaßleitung, in welcher der Luftdruck mittels eines Einlaßventiles regelbar ist, und einem Registriergerät, gekennzeichnet durch eine Druckregeleinrichtung zur Erzeugung eines kontinuierlichen und gleichförmig ansteigenden Luftdruckes in der Einlaßleitung, einen den Luftdruck in der Einlaßleitung (6) überwachenden, elektronischen Druckaufnehmer (9), eine elektronische Auswerte- und Steuerschaltung (10) mit einem Zeitschalter, einer einstellbaren Schwelle für eine Druckeinstellung und einem Spitzenwertdetektor, wobei die Auswerte- und Steuerschaltung (10) das Einlaßventil (7) und ein an die Einlaßleitung (6) angeschlossenes Entlüftungsventil (8) steuert, sowie auf das Registriergerät (11) einwirkt, wobei obige Bauteile derart geschaltet sind, daß über die Druckregeleinrichtung der Luftdruck in der Einlaßleitung (6) bis zum Erreichen des mittels der Schwelle einstellbaren Druckhaltetestdruckes gesteigert wird, dann das Einlaßventil (7) solange geschlossen wird, bis es nach Ablauf der am Zeitschalter eingestellten Zeit erneut geöffnet wird und über die Druckregeleinrichtung eine weitere Steigerung des Luftdruckes in der Einlaßleitung (6) solange herbeigeführt wird, bis bei Erreichen des Bubble-Points mittels des Spitzenwertdetektors kein weiterer Luftdruckanstieg mehr feststellbar ist und durch den Spitzenwertdetektor das Entlüftungsventil (8) bei gleichzeitiger Schließung des Einlaßventiles (7) geöffnet wird.

2. Prüfeinrichtung nach Anspruch 1, dadurch gekennzeichnet, daß die Auswerte- und Steuerschaltung (10) eine Einstellvorrichtung zur Steuerung des Luftmengendurchsetzers in der Einlaßleitung aufweist.

3. Prüfeinrichtung nach Anspruch 2, dadurch gekennzeichnet, daß mittels der Einstellvorrichtung der Luftmengendurchsatz nach Beendigung des Druckhaltetestes bis zum Erreichen des Bubble-Points gegenüber dem Luftmengendurchsatz bis zum Erreichen des Druckhaltetestdruckes automatisch reduzierbar ist.

4. Prüfeinrichtung nach Anspruch 1, dadurch gekennzeichnet, daß das Einlaßventil (7) als pulsierendes Ventil (Puls- oder Taktventil) ausgebildet ist.

5. Prüfeinrichtung nach Anspruch 2 und 4, dadurch gekennzeichnet, daß über die Einstellvorrichtung die Frequenz und das Tastverhältnis des pulsierenden Ventils (7) einstellbar ist.

6. Prüfeinrichtung nach Anspruch 1, dadurch gekennzeichnet, daß der Zeitschalter einstellbar ist.

## Claims

1. In a device for testing a filter, particularly a sterile filter, including a filter housing having an air inlet and an air outlet and adapted to receive the filter which is to be tested, an inlet line connected to the housing air inlet, the air pressure in which is regulated by an inlet valve, and a recording mechanism, the improvement comprising pressure-regulating means capable of producing a continuous and evenly increasing air pressure in the inlet line (6), including an electronic pressure sensor (9) which monitors the air pressure in the inlet line, an electronic evaluating and control circuit (10) having a time switch, an adjustable threshold device for effecting pressure adjustment and a peak pressure sensor, the evaluating and control circuit (10) controlling the inlet valve (7), a vent valve (8) which is connected to the inlet line (6) and the recording mechanism (11) so that the air pressure increases in the inlet line (6) until it reaches a preselected pressure-resisting test pressure which can be adjusted by means of the adjustable threshold device, the inlet valve (7) then being closed until the time set on the time switch expires, a further increase of the air pressure in the inlet line (6) then occurring until the peak pressure sensor determines no further air-pressure increase is occurring, indicating the bubble point has been reached, the peak pressure sensor then causing the control circuit to open the vent valve (8) and simultaneously close the inlet valve (7).

2. The device according to Claim 1, wherein the evaluating and control circuit (10) has an adjusting device for adjusting the rate of air flow into the inlet line.

3. The device according to Claim 2, wherein the adjusting mechanism automatically reduces the rate of air flow into the inlet line after the pressure-resisting test is finished and until the bubble point is reached, as compared to the rate of air flow into the inlet line before the pressure-resisting test pressure has been reached.

4. The device according to Claim 1, wherein the inlet valve (7) is constructed as a pulsating valve.

5. The device according to Claim 4, wherein the frequency and keying ratio of the inlet valve (7) can be changed by an adjusting mechanism.

6. The testing device according to Claim 1, wherein the time period of the time switch can be adjusted.

## Revendications

1. Dispositif de contrôle pour filtres, en particulier, pour filtres stériles, ce dispositif comportant un logement de filtre pourvu d'une admission et d'une évacuation d'air et destiné à recevoir le filtre à contrôler, une conduite d'admission raccordée à l'admission d'air et dans laquelle la pression d'air peut être réglée au moyen d'une soupape d'admission, ainsi qu'un appareil d'enregistrement, caractérisé en ce qu'il comporte un dispositif de réglage de pression en vue de créer, dans la conduite d'admission, une pression d'air s'élevant continuellement et uniformément, un capteur électronique de pression (9) contrôlant la pression d'air dans la conduite d'admission (6), un circuit électronique d'évaluation et de commande (10) comportant une minuterie, un seuil réglable pour un réglage de pression et un détecteur de valeur de crête, ce circuit commandant la soupape d'admission (7) et une soupape d'évacuation d'air (8) raccordée à la conduite d'admission (6), tout en agissant sur l'appareil d'enregistrement (11), les éléments ci-dessus étant montés de telle sorte qu'à l'intervention du dispositif de réglage de pression, la pression d'air régnant dans la conduite d'admission (6) soit accrue jusqu'à ce qu'on atteigne la pression d'essai de maintien réglable au moyen du seuil la soupape d'admission (7) étant ensuite fermée jusqu'à ce qu'elle soit à nouveau ouverte après l'écoulement du temps réglé à la minuterie et qu'à l'intervention du dispositif de réglage de pression, on provoque un accroissement complémentaire de la pression d'air dans la conduite d'admission (6) jusqu'à ce que, après avoir atteint le point de formation de bulles, on ne puisse plus constater une élévation complémentaire de la pression d'air au moyen du détecteur de valeur de crête et jusqu'à ce que, grâce à ce dernier, la soupape d'évacuation d'air (8) soit ouverte lors de la fermeture simultanée de la soupape d'admission (7).

2. Dispositif de contrôle selon la revendication 1, caractérisé en ce que le circuit d'évaluation et de commande (10) comporte un dispositif de réglage en vue de régler le débit d'air dans la conduite d'admission.

3. Dispositif de contrôle selon la revendication 2, caractérisé en ce qu'au moyen du dispositif de réglage, on peut réduire automatiquement, jusqu'à ce qu'on atteigne le point de formation de bulles, le débit d'air régnant au terme de l'essai de maintien de pression vis-à-vis du débit d'air régnant jusqu'à ce qu'on atteigne la pression d'essai de maintien.

4. Dispositif de contrôle selon la revendication 1, caractérisé en ce que la soupape d'admission (7) est réalisée sous forme d'une soupape pulsée (soupape à impulsions ou intermittente).

5. Dispositif de contrôle selon les revendications 2 et 4, caractérisé en ce que, à l'intervention du dispositif de réglage, on peut régler la fréquence et le taux d'impulsions de la soupape pulsée (7).

6. Dispositif de contrôle selon la revendication 1, caractérisé en ce que la minuterie est réglable.

## Fig.1

## Fig.2